# EUROPEAN PATENT APPLICATION

(11) **EP 0 559 015 A1**
(43) Date of publication of application: **08.09.1993**
(21) Application number: 93102619.9
(22) Date of filing: 19.02.1993
(51) Int. Cl.: A24C 5/34, G01N 27/22

(54) **Method and device for checking without direct contact the degree of filling of the ends of cigarettes**

(30) Priority: 04.03.1992 IT GE920020
(71) Applicant: SASIB S.p.A., I-40128 Bologna (IT)
(72) Inventor: Impera, Tiziana, I-09010 Santadi (IT); Piana, Maurizio, I-40033 Casalecchio di Reno (IT)
(74) Representative: Porsia, Bruno

(57) **Abstract**

The invention relates to a method of checking without direct contact the degree of filling of the ends of cigarettes. In order to permit the elimination of errors in evaluation due to positioning tolerances, the invention proposes a method in which, in addition to measurement without direct contact of the variation of the dielectric constant of the cigarette ends, a measurement without contact is made of the distance of each cigarette (S) from the capacitive sensor. To eliminate the effect of the moisture level of the tobacco on the evaluation, the invention proposes the statistical processing of the measured values and statistical determination of a fluctuating discrimination threshold by using correlation functions relating the measured values which are determined in the course of the measurement process from the data from measurement of representative statistical samples. The statistical sample is chosen on the basis of the number of cigarettes which can be produced with one loading of the producing machine with tobacco. The invention also relates to a device for the application of the method.

## Description

The invention relates to a method and device for checking without direct contact the degree of filling of the ends of cigarettes.

The invention relates in particular to methods and devices of the aforesaid type which use a capacitive sensor for this purpose.

When the degree of filling is measured with sensors of the capacitive type, it is necessary to take into account diverse variables which may distort the results of measurement, causing correctly made cigarettes to be confused with cigarettes to be rejected.

These variables are the length of the cigarettes, which may vary within specified tolerances, the positioning of the cigarettes with respect to the capacitive sensor, which may also vary within specified limits, and the moisture of the tobacco.

The first two variables cause a variation of the fraction of the electrical field which permeates the ends of the cigarettes. On the other hand, the different moisture level of the tobacco affects its dielectric constant. In both cases, therefore, the variations of capacitance found by the capacitive sensor may lead to a complete simulation or partial distortion of the variations of capacitance actually due to defective filling of the ends of cigarettes.

A further source of error in the determination of the degree of filling of the ends of cigarettes consists of the effects of environmental conditions on the detecting sensors, such as thermal fluctuations, variations of sensitivity, contamination, etc.

The object of the invention is therefore to provide a method of the type described initially which permits the simple, relatively rapid and reliable elimination of the effect of the aforesaid disturbing variables with respect to the tolerances of length and positioning of the cigarettes and to the different levels of moisture of the tobacco, while simultaneously giving greater sensitivity of determination and greater accuracy of discrimination between defective and acceptable cigarettes.

A further object of the invention consists in the provision of a device, which is of simple construction, is inexpensive, and is easy to use, regulate and maintain, for the application of the aforesaid method.

The invention achieves the above objects with a method of checking without direct contact the degree of filling of the ends of cigarettes, comprising the following stages:
a) the cigarettes are made to pass with their ends at a certain distance in front of a capacitive sensor capable of generating an electrical field, in such a way that they enter the said electrical field, while variations in the field caused by interference with the end of each cigarette are found in the form of variations of capacitance;
b) at the same time, the distance of the end of each cigarette from the capacitive sensor is measured as a function of the fraction of a light beam of specified flux, which is aimed transversely at the terminal areas of the cigarettes, passing through the space between the end of the cigarette and the capacitive sensor;
c) the measurement of the fraction of light passing is converted into an absolute measurement of distance by means of a specified correlation function relating the said two values which is determined experimentally and whose parameters are established experimentally and cyclically at fixed intervals corresponding to batches of cigarettes of specified quantities, with the aid of the determination of the distance of at least two fixed reference elements which are disposed with one at a known smaller distance and the other at a known greater distance from it and which are made to pass in front of the capacitive sensor as part of the flow of cigarettes;
d) the variations of capacitance found are corrected with respect to a fixed reference distance which is identical for all the cigarettes, using the difference between the corresponding distance measurements and the fixed reference distance and a correlation function relating the distance of the ends of cigarettes from the capacitive sensor to the variations of capacitance found by the sensor (distance-capacitance correlation function), the said distance-capacitance correlation function being determined experimentally.

The distance-capacitance correlation function is advantageously determined in the following manner:
a) the distance and variation of capacitance found for each cigarette of a batch of cigarettes of specified quantity are stored in a memory;
b) a certain type of function is chosen empirically;
c) the parameters of the preselected function are determined by a process of regression on the basis of the stored pairs of values of distance and variation of capacitance.

The parameters of the distance-capacitance correlation function determined on the basis of the measurements relative to each of one or more preceding batches having specified quantities of cigarettes are used for the statistical calculation of the parameters of the capacitance-distance correlation function relative to an immediately following batch.

The capacitance-distance correlation function is preferably a linear function, while the number of cigarettes in each batch is determined empirically and corresponds substantially to the number of cigarettes which may be manufactured from one load of tobacco supplied to the producing machine with its own substantially uniform characteristics of quantity and moisture.

The variations of capacitance, corrected with respect to the fixed reference distance of the ends of the cigarettes from the capacitive sensor and with respect to each batch of cigarettes, are subsequently converted to values which may be related to a reference scale common to all batches of cigarettes (standardised capacitance variations), while the following are established:
- an absolute threshold of discrimination between defective and acceptable cigarettes, valid for all batches of cigarettes and constant over time, on the basis of which the cigarettes having a variation of standardised capacitance below the said threshold are considered defective;
- a fluctuating threshold for each batch of cigarettes, whose value is always greater than that of the absolute threshold, and on the basis of which the cigarettes of the corresponding batch having a variation of standardised capacitance below the said fluctuating threshold but not necessarily below the absolute threshold are considered defective.

The fluctuating threshold for the cigarettes under examination is determined statistically from the mean and from the standard deviation of the standardised variations of capacitance relative to a restricted number of cigarettes checked previously.

The number of cigarettes in each batch whose standardised variation of capacitance is used for the determination of the fluctuating threshold is advantageously from 10 to 50 times, preferably 40 times, smaller than the total number of cigarettes in the batch.

The advantages of the method according to the invention are evident from the above information.

Both the measurement of the degree of filling of the cigarettes and the measurement of their distance from the capacitive sensor are performed without means using direct contact, thus avoiding the risk of damage.

The measurement of the distance of the cigarettes from the capacitive sensor permits the elimination of errors of evaluation of the degree of filling due to the tolerances of length and positioning of the cigarettes with respect to the capacitive sensor. The statistical method of processing the currently acquired data on the basis of those previously obtained, and the determination of the discrimination thresholds, particularly the statistical determination of the fluctuating discrimination threshold, make it possible to have a greater sensitivity of discrimination between the defective and the acceptable cigarettes and a continuous adaptation of the inspection system to the statistical variations of the process variables such as the moisture of the tobacco, eliminating their effect in the form of an error of evaluation of the degree of acceptability of the cigarettes. By standardisation, with reference to a common scale for all the batches, of the variations of capacitance found, it is possible to choose a lower discrimination threshold which remains constant over time, ensures the comparability of the evaluation criteria, and guarantees a minimum quality of the cigarettes should the statistics be temporarily distorted.

The invention is based on the recognition that the number of cigarettes in the statistical samples used must be such as to form a compromise between opposing requirements. This number of cigarettes must be sufficiently great to ensure that the permanent presence of defective cigarettes does not significantly alter the statistically determined values. On the other hand, it must not exceed a given value, in order to prevent it from ceasing to represent the current process as a result of the occurrence of a sudden variation in the conditions of the cigarettes, for example the moisture of the tobacco. As regards the moisture of the tobacco, it has in fact been found that such variations occur normally at a typical rate corresponding to the number of cigarettes produced from one load of tobacco supplied to the producing machine. A more precise analysis was able to demonstrate that, owing to the methods of production of the cut of tobacco, each machine load generally has its own relatively uniform moisture characteristics, while variations of moisture may occur between one load and another. Furthermore, the number of cigarettes produced from one load meets the requirements stated above. Consequently it was possible to establish with greater precision the optimal size of the statistical sample capable of ensuring optimal results, which is of the order of 40,000 cigarettes for a machine operating at 8,000 c.p.m.

Further characteristics of the method according to the invention and of the device form the subject of the subsidiary claims.

The characteristics of the method and of the device according to the invention will be evident in greater detail from the following description of a non-restrictive example of embodiment illustrated in the drawings, in which
Fig. 1 is a perspective view of the checking device;
Fig. 2 is an enlarged axial section in the area of the device according to Fig. 1 in which the measuring heads are provided;
Fig. 3 is a front view, partly in section, of a measuring head; and
Fig. 4 is a schematic representation of the operation of the measuring head.

The illustrated device is of the type designed to be applied to a filter cigarette producing machine down-line from the filter application point. The filter application point generates two parallel outgoing flows of cigarettes. Accordingly, the cigarette end checking device has two conveyor drums 1, 1', each for one of the cigarette flows. Each conveyor drum 1, 1' is associated with a head 2, 2' for measuring the degree of filling of the ends of the cigarettes which operate in an identical way. The two drums 1, 1' are supported rotatably on the ends of a common axle 3 which is carried by the frame 4 of the device. Since the drums are substantially identical and the measuring heads operate in an identical manner, the following description is limited to a single drum 1 and a single measuring head 2.

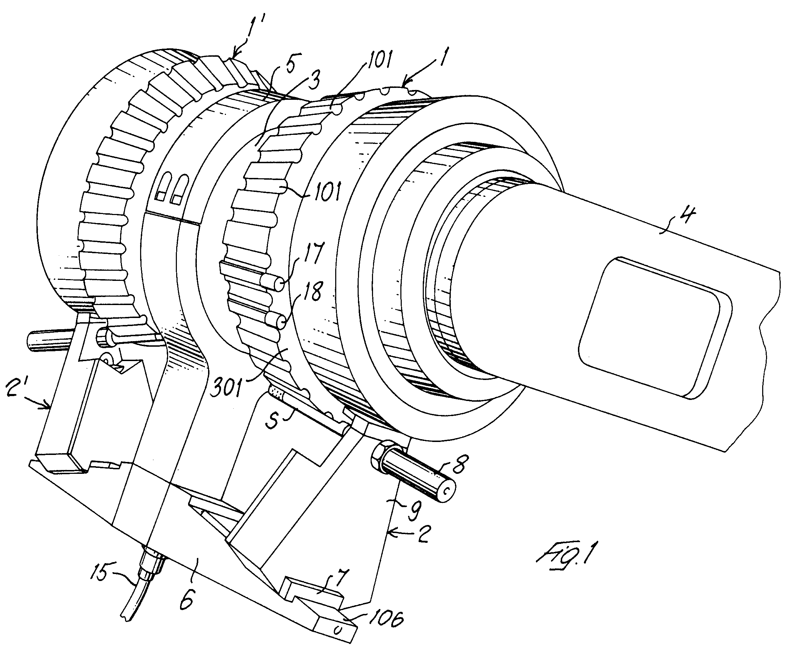

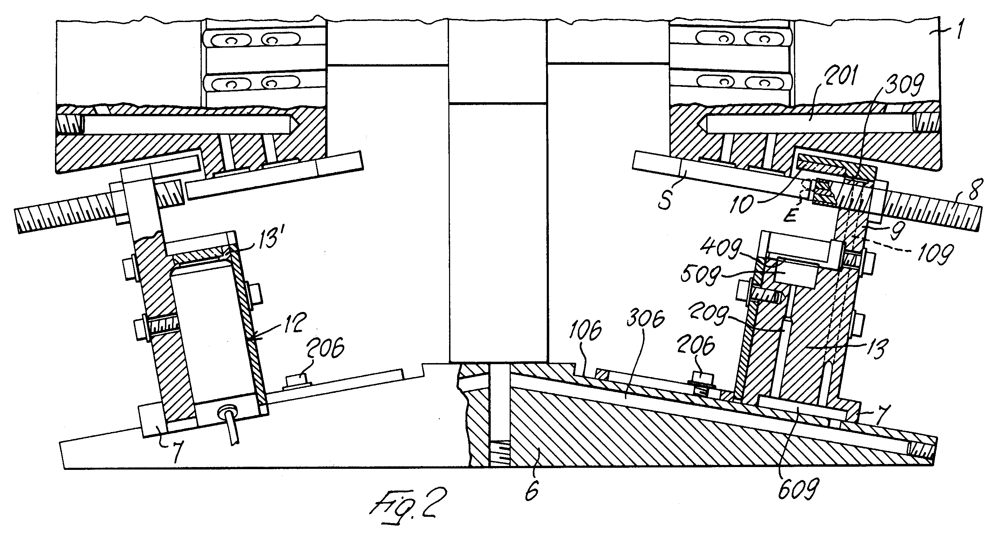

The drum 1 is of truncated conical form and is provided with peripheral cavities 101 for housing the cigarettes S which are distributed at equal angular intervals. The cavities 101 are preferably formed peripherally in a coaxial truncated conical ring 301 fitted on the drum 1 and projecting from it in the form of a step. The lengths of the cavities 101 are less than the lengths of the cigarettes S, which are disposed with their ends, in particular the ends to be checked, projecting beyond the corresponding face of the cavity 101 (Fig. 2). Two cylindrical members 17, 18 disposed in the median point with respect to the cavities 101 are fixed to the truncated conical ring 301. The said cylindrical members 17, 18 are disposed with one following the other, with respect to the direction of rotation of the drum 1, and are inserted between pairs of successive cavities 101. They project by different amounts from the face of the ring 301 from which the ends of the cigarettes to be checked project, one by a considerably smaller amount and the other by a considerably greater amount than the cigarettes S. A supporting clamp 5 whose free end holds a bracket 6 and which is orientated parallel to the axis of each drum 1 and projects towards it is centrally fixed on the intermediate section between the two drums 1, 1' of the supporting axle 3. The side of the bracket 6 facing the drum 1 forms a guide 106 for a slide 7 on which the measuring head 2 is supported. The measuring head extends towards the drum 1 and is orientated substantially radially and perpendicularly with respect to the peripheral surface of the truncated conical ring 301, with its projecting end disposed adjacent to the face of the said ring 301 from which project the ends of the cigarettes S to be checked. The bracket 6 is advantageously wedge-shaped and the guide 106 is advantageously inclined parallel to the peripheral surface of the truncated conical ring 301. The slide 7 can be locked in position on the guide 106 by locking means 206 and permits the positioning, in the axial direction of drum 1, of the measuring head 2 and the drum 1 with respect to each other. Adjustment of the angular positioning of the measuring head 2 and the drum 1 with respect to each other is made possible by the particular construction of the supporting clamp 5 in the form of a ring which may be tightened on the intermediate section of the supporting axle 3.

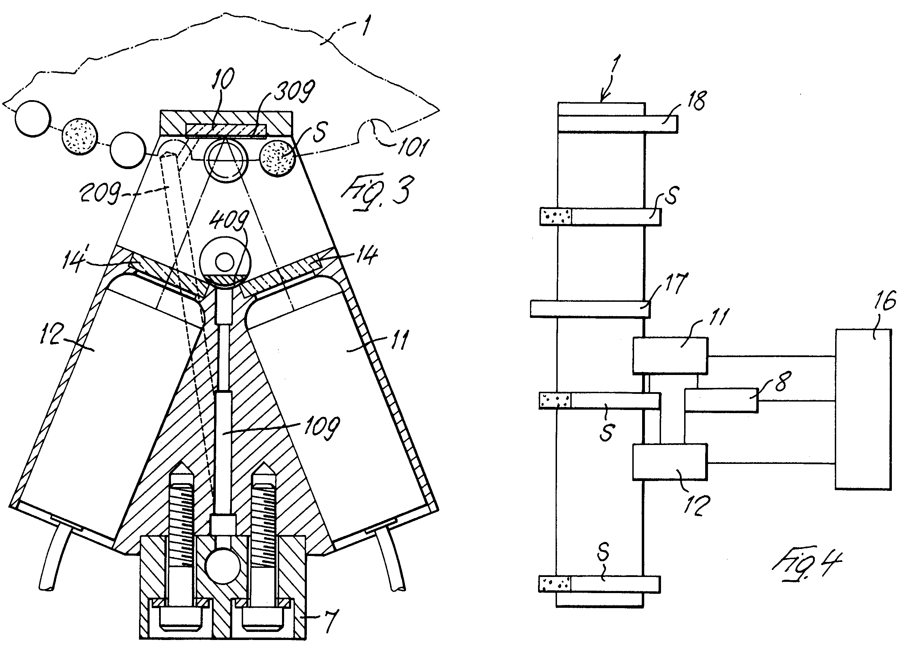

As will be seen in greater detail in Figs. 2 and 3, the cavities 101 of the drum 1 are of the suction type. Suction ducts 201 which are provided within the drum 1 open into these cavities.

The measuring head 2 holds a capacitive sensor 8 which is of cylindrical form and is disposed at the level of the cigarettes S which pass in front of it in the cavities 101 of the drum 1. The capacitive sensor 8 is disposed coaxially with the cigarettes S and is supported in a perpendicular base plate 9 in such a way that it can be moved axially. The distance of the capacitive sensor 8 from the end of the cigarette S must be such that the latter enters the electrical field (illustrated schematically and indicated by E in Fig. 2) which is generated by the end of the capacitive sensor 8. At a position radially further inward than the bottom of the cavity 101, with reference to the axis of the drum 1, the base plate 7 carries a mirror 10 which is disposed to coincide with the area of the end of the capacitive sensor 8 and the end of the cigarette S next to it and faces the said ends. On the diametrically opposite side, the base plate 9 carries a source 11 of a beam of parallel light rays and a photoelectric transducer 12. The light source 11 and the photoelectric transducer 12 are disposed so that they are spaced apart, with reference to the direction of rotation of the drum 1, and are orientated symmetrically with respect to the median perpendicular plane of the mirror 10 which contains the longitudinal axis of the cigarette S which is being checked and is coaxial with the capacitive sensor 8, in the direction of the point of incidence of the said plane with the mirror 10 and perpendicularly to the longitudinal axis of the cigarette S being checked. The source 11 is advantageously of the type capable of generating a laser beam, while the photoelectric transducer 12 generates a signal with a voltage proportional to the incident light flux.

To eliminate the effect of contamination, by dust for example, of the mirror 10, of the light source 11 and of the photoelectric transducer 12, which would cause progressive deviation of the measurement signals, it is provided that the light source 11 and the photoelectric transducer should be housed in a chamber 13, 13' which is closed to the exterior and provided on the end facing the mirror 10 with a window blocked with a transparent element 14, 14' which may be a lens, of the cylindrical type for example, to enlarge the beam of parallel rays in the case of the light source 11, or a convex concentrating lens in the case of the photoelectric transducer 12. In addition, supply ducts 109, 209 for compressed air, opening into corresponding apertures 309, 409 next to the mirror 10 and windows 14, 14' respectively, are formed in the base plate 9, and are designed in such a way that they generate a blast of cleaning air capable of removing dust. For this purpose, the extension of the air blast must to the greatest possible extent correspond to the surfaces of the mirror 10 and of the windows 14, 14' to be cleaned. The aperture 309 associated with the mirror consists of a thin slit extending parallel to and at the level of the surface of the mirror 10. For the windows 14, 14', the aperture 409 consists of a thin slit provided at the level of the external side of the transparent blocking element along its inner lateral side, perpendicular to the base plate 9. The two slits 409 communicate with a common collector 509 which is disposed centrally between the two windows 14, 14' and into which the duct 109 opens. The compressed air is supplied to the ducts 109, 209 through the bracket 6, a supply duct 306 to which a supply tube 15 is connectable being formed in the bracket. The duct 306 extends parallel to the bracket along the guide 106, being connectable, in a sealed way permitting sliding, to a collector 609 common to the ducts 109, 209 provided in the slide 7 of the measuring head 2.

As seen in the diagram in Fig. 4, the light source 11, the photoelectric transducer 12 and the capacitive sensor 8 are connected to an electronic central processing unit 16.

The measuring procedure is carried out according to the following steps. Each cigarette S is made to pass in front of the capacitive sensor 8 which detects the variations caused by the cigarette in the electrical field in the form of variations of capacitance proportional to the degree of filling of the ends of the cigarettes, that is to the consequent difference in dielectricity of the ends. At the same time, the photoelectric transducer 12 emits a voltage signal proportional to the fraction of the light flux of the beam of rays emitted by the source 11 which passes through the space between the end of the cigarette S being measured and the facing end of the capacitive sensor 8. This voltage signal is proportional to the width of the said space, that is to the distance of the end of the cigarette S from the end of the capacitive sensor 8. The pairs of signals for each cigarette are stored separately by the central processing unit 16. With each revolution of the conveyor drum 1, the reference cylinders 17, 18 pass through the measuring head 2 one after the other, and the voltage signal emitted by the photoelectric transducer 12 for each of them is recorded. The distances of the ends of the reference cylinders 17, 18 from the end of the capacitive sensor 8 are known and are stored, as a result of which the corresponding voltage signals form reference signals for the distance. This makes it possible both to eliminate deviations of the response of the photoelectric transducer and to carry out a procedure of correcting the variations of capacitance found with reference to a fixed reference distance common to all the cigarettes checked during a revolution of the drum 1. This procedure firstly requires the determination, on the basis of the reference signals, of the parameters of the response curve of the electrical transducer 12, that is of the correlation function relating the voltage signals to the distance of the ends of the cigarettes S from the capacitive sensor 8. Preferably the choice of wavelength of the beam of light rays and of the transducer 12 is such that the correlation function is of the linear type. This considerably facilitates the determination of the parameters of the function, that is of the angular coefficient and of the ordinate of origin, making it rapid and permitting a simple and inexpensive configuration of the central processing unit 16. The second step requires the calculation of the parameters of the correlation function relating the variations of capacitance recorded to the distance of the ends of the cigarettes from the capacitive sensor 8. In this case also, it is preferable to use capacitive sensors, in such a way that a linear function is obtained. The determination of the angular coefficient and of the ordinate of origin is carried out on the basis of the measurements relating to a previously checked batch of cigarettes having a specified number of cigarettes. The number of cigarettes in each batch is determined in accordance with the quantity of cigarettes which the producing machine manufactures with one load of tobacco supplied to it and which substantially determines the rate at which the tobacco shows variations in the moisture level. When the parameters of the voltage signal-distance correlation function and of the variation of capacitance-distance correlation function have been obtained, the variations of capacitance measured for the respective cigarettes under examination are corrected; these corrections are derived from values assumed by the variation of capacitance-distance correlation function for the values of the difference between the real measured distance of each cigarette S and the specified reference distance.

According to an improvement, in order to avoid a discontinuity from one batch to another of the parameters of the variation of capacitance-distance correlation function caused by an anomalous statistical distribution of defective cigarettes or some other factor, the parameters determined in a specified number of preceding batches are also stored, and the parameter to be used in the batch under examination is determined as the weighted mean of the stored parameters of the preselected preceding batches.

A subsequent stage of the processing procedure requires a conversion of the corrected variations of capacitance of each batch to standardised values related to a common reference scale. This makes it possible to obtain results which are comparable with each other and to establish a first absolute discrimination threshold which is constant over time and can be stored. All the cigarettes S which produce correct and standardised variations of capacitance below the said threshold are considered defective.

The standardisation of the corrected variations of capacitance also permits the statistical determination of a fluctuating threshold whose value is always greater than the absolute threshold, adapting the system to the variable conditions of the process such as the variation in the moisture level of the tobacco and any rapid variations of the condition of the cigarettes S, with suitable filtering of variations attributable to disturbances of the process.

The fluctuating threshold is determined statistically on the basis of the corrected and standardised variations of capacitance of a restricted number of checked cigarettes, for example approximately 1000. The fluctuating threshold is determined from the difference between the mean of the corrected and standardised variations of capacitance of the previously checked cigarettes and the standard deviation of the said corrected and standardised variations of capacitance. Thus it is not constant over time but adapts to the statistical conditions of the cigarettes. As with the absolute threshold, cigarettes with a standardised and corrected variation of capacitance below the fluctuating threshold but not necessarily below the absolute threshold are considered defective.

As will be seen from the preceding description, the processing method requires in all cases an initial starting stage, since for the first batch of cigarettes S which are checked it is not possible to carry out the procedures of determination of the parameters of the variation of capacitance-distance correlation function. The initial stage therefore requires the use of an initial batch with a reduced number of cigarettes, of the order of a thousand for example, which are not checked are made to go into production exactly as they are.

## Claims

1. Method of checking without direct contact the degree of filling of the ends of cigarettes, characterised by the following stages:
a) the cigarettes (S) are made to pass with their ends at a certain distance in front of a capacitive sensor (8) capable of generating an electrical field, in such a way that they enter the said electrical field, while variations in the field caused by interference with the end of each cigarette are found in the form of variations of capacitance;
b) at the same time, the distance of the end of each cigarette from the capacitive sensor (8) is measured as a function of the fraction of a light beam of specified flux, which is aimed transversely at the terminal areas of the cigarettes, passing through the space between the end of the cigarette and the capacitive sensor (8);
c) the measurement of the fraction of light passing is converted into an absolute measurement of distance by means of a specified correlation function relating the said two values which is determined experimentally and whose parameters are established experimentally and cyclically at fixed intervals corresponding to batches of cigarettes of specified quantities, with the aid of the determination of the distance of at least two fixed reference elements (17, 18) which are disposed with one at a known smaller distance and the other at a known greater distance from it and which are made to pass in front of the capacitive sensor (8) as part of the flow of cigarettes;
d) the variations of capacitance found are corrected with respect to a fixed reference distance which is identical for all the cigarettes, using the values assumed by a correlation function relating the distance of the ends of cigarettes from the capacitive sensor to the variations of capacitance found by the sensor (distance-capacitance correlation function), the said distance-capacitance correlation function being determined experimentally, in relation to the difference between the corresponding measurements of the distance of the cigarettes (S) from the capacitive sensor (8) and the fixed reference distance.

2. Method according to Claim 1, characterised in that the distance-capacitance correlation function is determined according to the following steps:
a) the distance and variation of capacitance found for each cigarette (S) of a batch of cigarettes of specified quantity are stored separately;
b) a certain type of correlation function is chosen empirically;
c) the parameters of the preselected function are determined by a process of regression on the basis of the stored pairs of distance and variation of capacitance;
d) the parameters of the distance-capacitance correlation function determined on the basis of the measurements relative to each of one or more preceding batches having specified quantities of cigarettes are used for the statistical calculation of the parameters of the capacitance-distance correlation function relative to a following or immediately following batch.

3. Method according to Claim 2, characterised in that the capacitance-distance correlation function is preferably a linear function, while the number of cigarettes in each batch is determined empirically and corresponds substantially to the number of cigarettes which may be manufactured from one load of tobacco supplied to the producing machine with its own substantially uniform characteristics of quantity and moisture.

4. Method according to Claim 1, characterised in that the variations of capacitance, corrected with respect to the fixed reference distance of the ends of the cigarettes from the capacitive sensor and with respect to each batch of cigarettes, are subsequently converted to values which may be related to a reference scale common to all batches of cigarettes (standardised capacitance variations), while the following are established:
- an absolute threshold of discrimination between defective and acceptable cigarettes, valid for all batches of cigarettes and constant over time, on the basis of which the cigarettes having a variation of standardised capacitance below the said threshold are considered defective;
- a fluctuating threshold for each batch of cigarettes, whose value is always greater than that of the absolute threshold, and on the basis of which the cigarettes of the corresponding batch having a variation of standardised capacitance below the said fluctuating threshold but not necessarily below the absolute threshold are considered defective.

5. Method according to Claim 4, characterised in that the fluctuating threshold for the cigarettes under examination is determined statistically from the mean and from the standard deviation of the standardised variations of capacitance relative to a restricted number of cigarettes checked previously.

6. Method according to Claim 5, characterised in that the number of cigarettes in each reduced batch whose standardised variation of capacitance is used for the determination of the fluctuating threshold is from 10 to 50 times, preferably 40 times, smaller than the total number of cigarettes in the batches of cigarettes for the determination of the capacitance-distance correlation function.

7. Method according to one or more of the preceding claims, characterised in that in the initial starting stage of the checking device the capacitance-distance correlation function relative to the second batch of cigarettes under examination is determined from a preceding first batch with a reduced number, of the order of a thousand checked cigarettes for example, these cigarettes not being checked.

8. Device for the application of the method according to one or more of the preceding claims, characterised in that it comprises:
a) a rotating conveyor drum (1) provided with a plurality of peripheral housings (101) for the cigarettes (S) disposed at equal angular intervals about the axis of the drum, on which the cigarettes are housed with the ends to be checked freely projecting beyond the corresponding face of the drum (1);
b) a capacitive sensor (8) adjacent to the conveyor drum (1) at the face of the drum corresponding to the ends of the cigarettes (S) to be checked, disposed in a coincident position in front of the frontal surface of the cigarette being measured, and at a certain distance from it;
c) a unit for measuring the distance of the end of the cigarette (S) from the capacitive sensor (8), comprising an emitter (11) of a beam of parallel light rays aimed perpendicular to the axis of the cigarette (S) at the facing surfaces of the ends of the cigarette and of the capacitive sensor and a photoelectric transducer (12) for determining the fraction of the flux passing through the space between the end of the cigarette (S) and the capacitive sensor on the side opposite the emitter (11);
d) an electronic central processing unit (16) to which are connected the capacitive sensor (8), the emitter (11) and the photoelectric transducer (12);
e) two fixed reference elements (17, 18) fixed on the conveyor drum (1) in the intermediate areas between two successive housings (101) for the cigarettes (S) and parallel to them, the said reference elements (17, 18) projecting beyond the face of the conveyor drum (1) oriented towards the capacitive sensor (8), one to a greater extent and the other to a lesser extent with respect to the cigarettes (S).

9. Device according to Claim 8, characterised in that the fixed reference elements are made in a cylindrical form similar to that of the ends of the cigarettes (S) at least in their parts which project beyond the face of the conveyor drum (1).

10. Device according to Claim 8, characterised in that the capacitive sensor (8), the emitter (11) and the photoelectric transducer (12) are housed in a common measuring head (2) which may be fixed in an adjustable way to the means of support (3) of the conveyor drum (1), while the emitter (11) and the photoelectric transducer (12) are disposed on the radially external side of the cigarette (S) being measured and are angularly spaced apart in the direction of rotation of the conveyor drum (1) and converge on the point of incidence of the plane containing the axis of the cigarette (S) being measured on the reflecting surface of a mirror (10) which is disposed facing them on the diametrically opposite side of the cigarette (S) being measured next to the projecting end of the cigarette (S) and the facing capacitive sensor (8).
